# EUROPÄISCHE PATENTSCHRIFT

(11) **EP 1 078 820 B1**
(45) Veröffentlichungstag und Bekanntmachung des Hinweises auf die Patenterteilung: **11.02.2004**
(21) Anmeldenummer: 00116105.8
(22) Anmeldetag: 28.07.2000
(51) Int. Cl.: B60R 13/02, F16B 5/12

(54) **Clipsverbindung**
Clip connector
Connecteur à pince

(30) Priorität: 20.08.1999 DE 19939554
(43) Veröffentlichungstag der Anmeldung: 28.02.2001
(73) Patentinhaber: Volkswagen Aktiengesellschaft, 38436 Wolfsburg (DE)
(72) Erfinder: Bergs, Andreas, 38518 Gifhorn (DE)

(56) Entgegenhaltungen:
- EP-A- 0 018 851
- GB-A- 2 118 612
- US-A- 3 288 505
- US-A- 3 636 593
- US-A- 5 186 517

## Beschreibung

Die Erfindung betrifft eine Clipsverbindung gemäß dem Oberbegriff des Patentanspruchs 1 wie z.B. aus US-A-3 288 505 bekannt ist.

Betrachtet man den bevorzugten Einsatzfall der Erfindung, nämlich zur Befestigung einer Innenverkleidung eines Fahrzeugs an einer Säule des Fahrzeugaufbaues, so ist man daran interessiert, beispielsweise im Rahmen von Reparaturarbeiten die Verkleidung leicht, d.h. ohne Verlust an Teilen und Einsatz von komplizierten Werkzeugen, entfemen zu können. Auf der anderen Seite muß aber die Clipsverbindung relativ hohe Kräfte aufnehmen können, die im Sinne einer Entfernung der Verkleidung von der Säule des Fahrzeugaufbaues wirksam sind.

Der Erfindung liegt die Aufgabe zugrunde, mit einfachen Mitteln eine gattungsgemäße Clipsverbindung zu schaffen, die ohne Zerstörung ihrer Bestandteile leicht lösbar ist, aber während des Vorhandenseins der Verbindung zwischen den beiden zu verbindenden Teilen relativ hohe Kräfte aufzunehmen vermag.

Die erfindungsgemäße Lösung dieser Aufgabe besteht in den kennzeichnenden Merkmalen des Hauptanspruchs, vorteilhafte Ausbildungen der Erfindung beschreiben die Unteransprüche.

Ein wesentlicher Bestandteil der erfindungsgemäßen Clipsverbindung ist der Schieber, auf dem sich der Clip mit Abstellungen an seinen freien Enden, die im folgenden auch als zweite Abstellungen bezeichnet werden, während der Existenz der Verbindung abstützt. Er durchsetzt mit seinen Schenkeln nämlich dann fluchtende Ausnehmungen in der Verkleidung (um bei dem bevorzugten Einsatzfall der Erfindung zu bleiben), der Säule und dem Schieber, von denen aber nur die Ausnehmung in dem Schieber dann so "eng" ist, daß sie die zweiten Abstellungen unmittelbar mit ihren Randpartien abstützt. Sobald dagegen der Schieber in einer vorgegebenen Richtung und um ein vorgegebenes Maß verschoben ist, wird ein Bereich der Ausnehmung mit größerer lichter Weite wirksam, d.h. befindet sich dieser Bereich an den Schenkeln des Clipses, und dieser kann unbehindert durch Randpartien und Randbereiche der verschiedenen Ausnehmungen aus dem Bereich von Schieber, Träger und Verkleidung herausrutschen oder herausgezogen werden. Anschließend kann der Schieber, der bis dahin einander berührende Bereiche von Träger und Verkleidung gleichsam U-förmig federnd umgriffen hat, von diesen abgezogen werden, so daß Träger und Verkleidung voneinander getrennt werden können. Alle Bestandteile der Clipsverbindung bleiben also unbeschädigt, so daß diese Teile zum erneuten Herstellen einer Clipsverbindung an dem bisherigen oder einem neuen Einsatzort Verwendung finden können.

Ein Ausführungsbeispiel der Erfindung wird im folgenden anhand der Zeichnung erläutert, deren Figuren folgendes darstellen:
Figur 1 eine Seitenansicht, teilweise im Schnitt, der Clipsverbindung,
Figur 2 eine demgegenüber um 90° verschwenkte Stirnansicht,
Figur 3 perspektivisch den Clip für sich alleine und
Figur 4 eine Ansicht nur des Schiebers von unten.

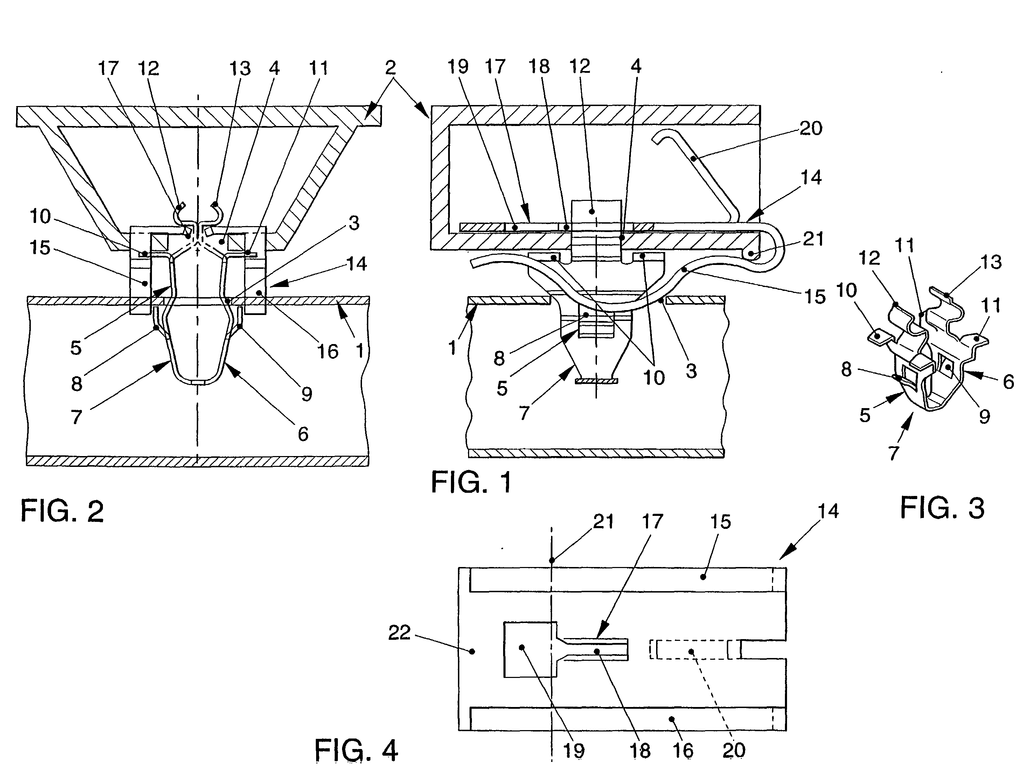

Betrachtet man zunächst die Figuren 1 und 2, so erkennt man bei 1 eine Säule des Fahrzeugaufbaues (in einem Horizontalschnitt), die als Träger für die Verkleidung 2 dient. Aufbau von Säule und Verkleidung brauchen im einzelnen nicht beschrieben zu werden, da sie in unterschiedlichen Ausführungen und Formgebungen bekannt sind und die Erfindung praktisch unabhängig von derartigen Gegebenheiten eingesetzt werden kann. Säule 1 und Verkleidung 2 sind mit fluchtenden Ausnehmungen 3 und 4 zum Durchtritt der Schenkel 5 und 6 des allgemein mit 7 bezeichneten, im wesentlichen U-förmigen federnden Clips versehen. Diese Schenkel 5 und 6 tragen nach außen weisende erste Abstellungen 8 und 9, mit denen sie Randbereiche der Ausnehmung 3 hintergreifen. Mit 10 und 11 sind Abstützungen des Clips 7 auf der Verkleidung 2 bezeichnet. An den freien Enden der Schenkel 5 und 6 sind nach außen weisende zweite Abstellungen 12 und 13 vorgesehen, die - siehe Figur 2 - in dieser Stirnansicht gleichsam eine geweihartige Anordnung bilden und die die Randbereiche der Ausnehmung 4 übergreifen. Die in Figur 2 in Querrichtung, in Figur 1 in Richtung senkrecht zur Zeichenebene gemessene lichte Weite der Ausnehmung 4 ist etwas größer als der Abstand der Außenseiten der zweiten Abstellungen 12 und 13 gewählt, so daß der Clip mit diesen zweiten Abstellungen 12 und 13 von unten her durch die Ausnehmung 4 hindurchgeschoben bzw. - falls nicht ein zusätzliches Teil vorhanden ist - nach unten herausgezogen werden kann.

Den Aufbau des Clips 7 läßt im einzelnen die perspektivische Darstellung der Figur 3 nochmals erkennen. Man sieht deutlich, daß es sich um einen federnden Clip handelt, denn in dem dort entlasteten Zustand sind die zweiten Abstellungen 12 und 13 bzw. die freien Endbereiche der Schenkel 5 und 6 voneinander entfernt; vergleiche damit Figur 2.

Während der Existenz der Verbindung zwischen den Teilen 1 und 2 wird das beschriebene Herausrutschen der zweiten Abstellungen 12 und 13 und damit die Bewegung des Clips 7 in der Darstellung der Figuren 1 und 2 nach unten durch den Schieber 14 verhindert. Dieser umgreift mit Federzungen 15 und 16 den hier interessierenden Bereich der Säule 1 und weist eine Ausnehmung 17 zum Durchtritt der Schenkel 5 und 6 des Clips 7 auf. Wie besonders deutlich aus Figur 4 ersichtlich, setzt sich die Ausnehmung 17 schlüssellochartig aus einem ersten Bereich 18 und einem zweiten Bereich 19 zusammen, von denen der erste Bereich, wie auch Figur 1 zeigt, bei Existenz der Clipsverbindung von den Clipsschenkeln 5 und 6 durchsetzt ist. Dieser Bereich 18 weist eine lichte Weite auf, die kleiner ist als der Abstand der Außenseiten der zweiten Abstellungen 12 und 13, so daß sich diese auf sich gegenüberliegenden, in Figur 4 oberen und unteren Randpartien des Ausnehmungsbereichs 18 abstützen. Sobald aber durch Aufbringen einer Kraft auf den Haken 20 der Schieber 14 eine vorgegebene Strecke in den Figuren 1 und 4 nach rechts bewegt worden ist, wird der eine größere lichte Weite besitzende Ausnehmungsbereich 19 wirksam, nämlich von den Schenkeln 5 und 6 des Clips 7 durchsetzt, und da seine lichte Weite größer ist als der Abstand der Außenseiten der zweiten Abstellungen 12 und 13, wird der Clip zur Bewegung in den Figuren 1 und 2 nach unten freigegeben: Die Clipverbindung wird aufgehoben.

Damit eine derartige Verschiebung des Schiebers 14 nicht ungewollt, beispielsweise bei starken Erschütterungen im Fahrbetrieb, auftritt, ist der von der Federzunge 15 umgriffene Rand der Verkleidung 2 mit dem leistenartigen Vorsprung 21 versehen, der gleichsam einen Hinterschnitt bildet, der von einer nach oben gebogenen Partie der Federzungen 15 und 16 hintergriffen wird. Auf diese Weise ist eine Rast gegen Verschiebebewegungen des Schiebers 14 gebildet.

Zur Versteifung kann der links von der Linie 21 befindliche Teil 22 des Schiebers 14 hochgebogen sein.

Wie auch diese Beschreibung eines Ausführungsbeispiels der Erfindung erkennen läßt, werden bei der Aufhebung der Clipsverbindung keinerlei Teile beschädigt, so daß sie zur Herstellung einer neuen Clipsverbindung Einsatz finden können. Der Schieber 14 dient zugleich zur Gewinnung einer großflächigen Auflage auf der Verkleidung 2.

## Patentansprüche

1. Clipsverbindung zur lösbaren Befestigung eines Bauteils an einem Träger dafür, insbesondere einer Verkleidung (2) an einer Säule (1) eines Fahrzeugaufbaues, mit einem im wesentlichen U-förmigen, zumindest bereichsweise federnden Clip (7), der auf seinen Schenkeln (5,6) nach außen weisende erste Abstellun (8,9) zum Hintergreifen sowie an den freien Enden der Schenkel nach außen weisende zweite Abstellungen (12,13) zum Übergreifen von Randbereichen von fluchtenden Ausnehmungen (4) in Bauteil und Träger aufweist, die er im montierten Zustand mit seinen Schenkeln durchsetzt, **dadurch gekennzeichnet, daß** der Clip (7) mit seinen Schenkeln (5, 6) ferner eine Ausnehmung (17) in einem Schieber (14) durchsetzt und im montierten Zustand sich mit seinen zweiten Abstellungen (12, 13) auf Randpartien dieser Ausnehmung (17) abstützt, die derart ausgelegt ist, daß nach einer vorgegebenen Verschiebebewegung des Schiebers (14) ihre Randpartien die zweiten Abstellungen (12, 13) und damit den Clip (7) freigeben, und daß die Ausnehmung (4) zumindest im Bauteil (2) eine lichte Weite in Richtung der zweiten Abstellungen (12, 13) hat, die dann den Durchtritt der zweiten Abstellungen (12, 13) zuläßt.

2. Clipsverbindung nach Anspruch 1, **dadurch gekennzeichnet, daß** die Ausnehmung (17) im Schieber in (14) schlüssellochartig zwei in Richtung der Verschiebebewegung aufeinanderfolgende Bereiche (18, 19) aufweist, von denen ein erster (18) eine solche lichte Weite in Richtung der zweiten Abstellungen (12, 13) hat, daß seine Randpartien die zweiten Abstellungen (12, 13) arretierend hintergreifen, während der zweite Bereich (19) eine solche lichte Weite hat, daß er den Durchtritt der zweiten Abstellungen (12, 13) zuläßt.

3. Clipsverbindung nach Anspruch 1 oder 2, **dadurch gekennzeichnet, daß** der Schieber (14) mit zumindest einer einen Rand des Trägers (1) übergreifenden Federzunge (15) diesen hintergreift.

4. Clipsverbindung nach Anspruch 3, **dadurch gekennzeichnet, daß** der Rand mit einem von der Federzunge (15) bei montiertem Schieber (14) federnd hintergriffenen Hinterschnitt (21) zur Bildung einer Schieberarretierung versehen ist.

5. Clipsverbindung nach einem der Ansprüche 1 bis 4, **dadurch gekennzeichnet, daß** der Schieber (14) einen haken- oder ösenartigen Bereich (20) zum Angriff eines Werkzeugs für die Einleitung der Verschiebebewegung aufweist.

## Claims

1. Clip connection for the releasable fastening of a component to a support for it, in particular of a trim panel (2) to a pillar (1) of a vehicle body, having an essentially U-shaped clip (7) which is resilient at least in some regions and has, on its limbs (5, 6), outwardly pointing, first offsets (8, 9) for engaging behind, and, on the free ends of the limbs, outwardly pointing, second offsets (12, 13) for engaging over, edge regions of aligned recesses (4) in the component and support, which the limbs of the clip pass through in the fitted state, **characterized in that** the clip (7) furthermore passes with its limbs (5, 6) through a recess (17) in a slide (14) and, in the fitted state, is supported by means of its second offsets (12, 13) on edge parts of this recess (17) which is configured in such a manner that, after a predetermined displacement movement of the slide (14), its edge parts release the second offsets (12, 13) and therefore the clip (7), and **in that** the recess (4) has, at least in the component (2), a clear width in the direction of the second offsets (12, 13), which then permits the passage of the second offsets (12, 13).

2. Clip connection according to Claim 1,
**characterized in that** the recess (17) in the slide (14) has, in the manner of a keyhole, two regions (18, 19) which follow each other in the direction of the displacement movement and a first (18) of which has such a clear width in the direction of the second offsets (12, 13) that its edge parts engage in a locking manner behind the second offsets (12, 13) while the second region (19) has such a clear width that it permits the passage of the second offsets (12, 13).

3. Clip connection according to Claim 1 or 2, **characterized in that** the slide (14) uses at least one spring tongue (15), which engages over an edge of the support (1), to engage behind said support.

4. Clip connection according to Claim 3, **characterized in that** the edge is provided with an undercut (21) which is engaged behind in a resilient manner by the spring tongue (15) when the slide (14) is fitted, for the purpose of forming a means of locking the slide.

5. Clip connection according to one of Claims 1 to 4, **characterized in that** the slide (14) has a hook- or lug-like region (20) for the application of a tool for initiating the displacement movement.

## Revendications

1. Liaison agrafée pour la fixation libérable d'un composant sur un support prévu pour ce composant, en particulier d'un habillage (2) sur une colonne (1) d'une carrosserie d'un véhicule, avec une agrafe (7) essentiellement en forme de U, dont au moins certaines parties sont élastiques et qui présente sur ses ailes (5, 6) des premiers rabats (8, 9) présentant vers l'extérieur destinés à s'engager derrière des bordures de découpes (4) alignées dans le composant et le support et sur les extrémités libres des ailes des deuxièmes rabats (12, 13) présentant vers l'extérieur destinés à chevaucher des bordures de découpes (4) alignées dans le composant et le support, l'agrafe traversant les découpes par ses ailes lorsqu'elle est montée, **caractérisée en ce que** les ailes (5, 6) de l'agrafe (7) traversent une découpe (17) ménagée dans un coulisseau (14) et, lorsqu'elle est montée, s'appuie par ses deuxièmes rabats (12, 13) sur des parties du bord de cette découpe (17) qui est conçue de telle sorte qu'après un mouvement prédéterminé de déplacement du coulisseau (14), ses parties de bord libèrent les deuxièmes rabats (12, 13) et libèrent ainsi l'agrafe (7) et **en ce qu'**au moins dans le composant (2), la découpe (4) présente dans la direction des deuxièmes rabats (12, 13) une largeur qui permet alors le passage des deuxièmes rabats (12, 13).

2. Liaison agrafée selon la revendication 1, **caractérisée en ce que** la découpe (17) ménagée dans le coulisseau (14) présente deux zones (18, 19) en forme de trou de serrure qui se suivent dans la direction du mouvement de déplacement et dont une première (18) présente dans la direction des deuxièmes rabats (12, 13) une largeur telle que ses parties de bord s'accrochent derrière les deuxièmes rabats (12, 13) en la bloquant, tandis que la deuxième zone (19) présente une largeur telle qu'elle permet le passage des deuxièmes rabats (12, 13).

3. Liaison agrafée selon la revendication 1 ou 2, **caractérisée en ce que** le coulisseau (14) s'accroche à l'arrière d'un bord du support (1) par au moins une languette de ressort (15) qui chevauche ce bord.

4. Liaison agrafée selon la revendication 3, **caractérisée en ce que** le bord est doté d'une contre-découpe (21) qui forme un arrêt pour le coulisseau et qui est accroché par l'arrière par l'une des languettes de ressort (15) lorsque le coulisseau (14) est monté.

5. Liaison agrafée selon la revendication 1 à 4, **caractérisée en ce que** le coulisseau (14) présente une zone (20) en forme de crochet ou d'oeillet qui permet d'engager un outil pour réaliser le mouvement de déplacement.
